# EUROPÄISCHE PATENTSCHRIFT

(11) **EP 2 987 607 B1**
(45) Veröffentlichungstag und Bekanntmachung des Hinweises auf die Patenterteilung: **07.06.2017**
(21) Anmeldenummer: 14181646.2
(22) Anmeldetag: 20.08.2014
(51) Int. Cl.: B29C 49/46

(54) **Formfüll-Verfahren**
Moulding and filling method
Procédé de moulage et remplissage

(43) Veröffentlichungstag der Anmeldung: 24.02.2016
(73) Patentinhaber: Krones AG, 93073 Neutraubling (DE)
(72) Erfinder: Winzinger, Frank, 93073 Neutraubling (DE)
(74) Vertreter: Grünecker Patent- und Rechtsanwälte PartG mbB

(56) Entgegenhaltungen:
- WO-A1-2010/116849
- WO-A2-2014/019691
- DE-A1- 3 226 172
- US-A1- 2014 157 726

## Beschreibung

Die Erfindung betrifft eine Formfüllmaschine und ein Verfahren zum Ausformen und Füllen von Kunststoffbehältern.

### Stand der Technik

Bekanntermaßen lassen sich Kunststoffbehälter im Streckblasverfahren aus Vorformlingen herstellen.

Alternativ zum Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Eine entsprechende Formfüllmaschine ist beispielsweise aus dem US 2014/0157726 A1 bekannt. Dabei wird zum Ausformen eine Flüssigkeit in den Behälter eingebracht, wobei die Flüssigkeit CO₂ in unterschiedlichen Konzentrationen in unterschiedlichen Prozessphasen beinhalten kann.

Ferner ist aus der WO 2014/019691 A2 ein Ausformen des Behälters durch Einbringen eines flüssigen Füllguts als Druckmedium in den Behälter bekannt. Auch hier ist vorgesehen, dass die Flüssigkeit in unterschiedlichen Prozessphasen unterschiedlichen Gehalt an Kohlendioxid oder verschiedene Temperaturen aufweist. Weiterhin ist vorgesehen, dass in einer zweiten Prozessphase Trockeneis der Flüssigkeit zugesetzt wird.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

### Aufgabe

Ausgehend vom bekannten Stand der Technik liegt der Erfindung die Aufgabe zugrunde, in einem in einer Formfüllmaschine befüllten Behälter möglichst sauerstoffarme Bedingungen zu realisieren.

### Lösung

Diese Aufgabe wird erfindungsgemäß durch das Verfahren zum Herstellen von Behältern aus Vorformlingen nach Anspruch 1 gelöst. Vorteilhafte Weiterbildungen der Erfindung sind in den Unteransprüchen erfasst.

Als Spülgas wird insbesondere inertes Gas, bevorzugt CO2, verwendet. So können unerwünschte Reaktionen des Spülgases mit dem Produkt vermieden und die Haltbarkeit erhöht werden. Das Verfahren ist dadurch gekennzeichnet, dass der Vorformling während des Ausformens durch eine in den Vorformling eingefahrene Reckstange verstreckt wird, die nach dem Ausformen aus dem Behälter herausgefahren wird, und anschließend das Produkt in den Behälter gefüllt wird.

In einer Ausführungsform wird der Vorformling vor dem Ausformen und bis nach Einbringen des Spülgases luftdicht durch eine Verschlussvorrichtung verschlossen. Eine möglicherweise unerwünschte Luftzirkulation über dem Produkt in dem befüllten Behälter und Verunreinigungen des Produkts können dadurch vermieden werden.

Die Formfüllmaschine zur Durchführung des Verfahrens ist dadurch gekennzeichnet, dass eine Ausblasvorrichtung zum Ausblasen von im Kopfraum des Behälters nach Befüllen noch verbleibenden Gases mittels eines Spülgases vorgesehen ist. Mit dieser Vorrichtung kann insbesondere in dem Kopfraum verbliebener Sauerstoff verdrängt werden, was die Haltbarkeit des Produkts, z.B. von Bier, erhöht.

In einer Ausführungsform ist vorgesehen, dass eine Reckstange in der Formfüllstation vorgesehen ist, die einen Behälter während des Ausformens verstrecken kann, wobei die Reckstange in den Vorformling einfahrbar und aus dem Behälter ausfahrbar ist. Die Reckstange verringert auf Grund ihres Eigenvolumens das oberhalb des Flüssigkeitspegels im Behälter verbleibende Gasvolumen.

Wird die Reckstange herausgezogen, vergrößert sich das Volumen im Kopfraum, in dem noch Gas verbleiben kann. Bevorzugt wird die Reckstange selbst als Ausblasvorrichtung eingesetzt, d.h. die Reckstange erhält einen Spülgasanschluss/ Kanal.

Es ist vorgesehen, dass die Düse an der Reckstange angeordnet ist. Diese Konstruktion kann kleiner ausgeführt werden als bei Verwendung einer zusätzlichen Lanze bzw. einer separaten Düse.

In einer weiteren Ausführungsform ist die Formfüllmaschine dadurch gekennzeichnet, dass eine Verschlussvorrichtung vorgesehen ist, die vor dem Ausformen um die Öffnung des Vorformlings zum luftdichten Verschließen positioniert werden kann, wobei die Lanze in der Verschlussvorrichtung angeordnet ist. Luftzirkulationen können so vermieden werden und gegebenenfalls sogar das Verbleiben von unerwünschten Gasen im Kopfraum.

Das Spülgas kann beispielsweise aus einem Produktkanal abgezweigt werden. Ebenfalls ist es denkbar, das Spülgas von einem Kompressor in die Maschine einzuleiten.

Es wäre auch denkbar, dass, der Behälter mittels unter Druck stehendem, inertem Gas bzw. CO₂ zumindest teilweise umgeformt bzw. aufgeblasen wird. Insbesondere erhält der Behälter zwischen 20% und 95%, bevorzugt zwischen 30% und 90% seines späteren Volumens durch das teilweise Blasformen mit dem inerten Gas. Insbesondere erhält der Behälter zwischen 30% und 100%, bevorzugt zwischen 50% und 100% seiner Längserstreckung (von Mündung zu Boden) während des teilweisen Blasformens. Insbesondere wird bei dem teilweisen Vorblasen des Behälters eine Reckstange in diesen eingeführt, welche eine Längsreckung des Vorformlings bewirkt.

Insbesondere ist eine Vielzahl von Behandlungsstationen bzw. Form- und Füllstationen vorgesehen, welche insbesondere am Außenumfang eines sich kontinuierlich drehenden Rundläufers angeordnet sind. Bei dem Rundläufer handelt es sich vorzugsweise um ein Rad.

Der Rundläufer dreht sich insbesondere um eine vertikale Achse, deren Verlängerung den Erdmittelpunkt schneidet.

Insbesondere sind die Stationen alle in äquidistanten Abständen zueinander angeordnet. Die Stationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.
In sämtlichen oben beschriebenen Beispielen kann die Formfüllmaschine eine Verschlusseinrichtung aufweisen, die zum Verschließen der gefüllten Kunststoffbehälter, beispielsweise mithilfe von Drehverschlüssen, ausgebildet ist. Insbesondere findet das Verschließen in einem Zeitraum statt, innerhalb dem der Behälter noch in der Form bzw. Kavität, in der er geformt wurde, angeordnet ist. Die Verschlusseinrichtung befindet sich hierfür in der unmittelbaren Umgebung des Rundläufers, insbesondere in seiner Peripherie und spendet den Verschluss zu einem Zeitpunkt, bei welchem schon sämtliches Endprodukt im Behälter ist und eine Blas- oder Fülldüse vom Behälter abgehoben wurde.

Insbesondere findet die Herstellung bzw. Expansion und das Befüllen der Behälter innerhalb eines Raums mit kontaminationsarmer Umgebung statt. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird.
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder Senken eines Behälters und/oder die für die Bewegung einer Blas- oder Fülldüse
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert, insbesondere innen und außen.

Der Raum ist insbesondere im Wesentlichen scheibenförmig ausgebildet. Er kann auch ringoder torusförmig ausgebildet sein - die Drehachse ist dann außerhalb der kontaminationsarmen Umgebung.

Insbesondere wird der Behälter auf ein und demselben Karussell (Rundläufer) expandiert und mit dem zu verpackenden Endprodukt befüllt.

Insbesondere handelt es sich bei den Behältern vor dem Expandieren um Kunststoffvorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport bzw. weiteren Handling des Vorformlings/Behälters vorgesehen ist.

In Transportrichtung der Behälter stromaufwärts der Formfüllmaschine kann eine Erwärmungseinrichtung vorgesehen sein, welche die kalt angelieferten Vorformlinge erwärmt. Als Erwärmungseinrichtung kann ein Infrarotofen dienen, durch welchen die Vorformlinge transportiert werden. An zumindest einer Seite einer tunnelförmigen Heizstrecke durch den Ofen sind insbesondere Infrarotstrahler angeordnet. Anstatt des Infrarotofens kann auch eine Mikrowellenerwärmungseinrichtung vorgesehen sein, in der insbesondere für jeden Vorformling individuell zugeordnete Kavitäten zur Erwärmung angeordnet sind. Während es sich beim Mikrowellenofen bevorzugt um einen Rundläufer handelt, werden die Vorformlinge beim Infrarotofen zumindest einen Teil der Strecke geradlinig transportiert.

Anstatt der eben beschriebenen Verfahren und Vorrichtungen zum Erwärmen von kalten (Umgebungstemperatur) Vorformlingen können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. U.U. muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt, kurz bevor diese an die Formfüllmaschine weitergegeben werden. Werden die Vorformlinge innerhalb eines Reinraums spritzgegossen, so ist u.U. keine weitere Sterilisation dieser nötig, wenn sich der Reinraum bis zu einer Position hin erstreckt, an der ein Verschluss auf den Behälter nach dem Befüllen aufgebracht wird.

Insbesondere ist das Endprodukt ein karbonisiertes Getränk.

Wie gesagt kann zum Aufblasen des Behälters auch CO₂ verwendet werden.

Insbesondere sind alle Einrichtungen (Kompressor, Leitungen, Tanks, Drehverteiler, Formfüllstationen, Blas-/Fülldüse) in den Bereichen beheizbar, mit denen das CO₂ in Kontakt kommt.

Es wäre auch denkbar, das CO₂ der Maschine flüssig zuzuführen und es innerhalb der Maschine kurz vor dem Einleiten in den Vorformling so zu erwärmen, dass es gasförmig wird.

Insbesondere wenn ein nicht karbonisiertes Getränk abgefüllt werden soll, kann man anstatt des CO₂ 's auch ein anderes inertes Gas - insbesondere Stickstoff - für alle in dieser Schrift genannten Verfahren und Vorrichtungen (bis auf das Karbonisieren) einsetzen. Insbesondere bietet dies den Vorteil, dass wenig Sauerstoff im Behälter vorhanden ist.

Wenn das CO₂ zum Recyceln aus der Maschine durch den Drehverteiler ausgeleitet wird, wird hierfür insbesondere eine separate Spur im Drehverteiler vorgesehen.

Neben einer produktführenden Spur, einer CO₂ - führenden Spur zum Einleiten von CO₂ in den drehenden Teil der Maschine kann auch eine weitere Spur im Drehverteiler zum Herausführen von CO₂ vorgesehen werden. Insbesondere wird das herausgeführte CO₂ zwischen zwei Kompressorstufen eingeführt und/oder zum Karbonisieren des Getränks verwendet und in Leitungen zu einer oder beiden dieser Einrichtungen geführt.

Zum Zuführen von CO₂ können Ventile vorgesehen werden, welche steuerbar geöffnet werden können. Durch ein Ventil kann ein CO₂ - führender Tank oder Ringkanal unter einem Vorblasdruck mit dem herzustellenden Behälter verbunden werden. Durch ein zweites Ventil kann ein unter einem Fertigblasdruck stehender Ringkanal oder Tank mit dem herzustellenden Behälter verbunden werden. Insbesondere wird zuerst das erste Ventil geöffnet, dann wieder geschlossen und dann das zweite Ventil geöffnet. Während das zweite Ventil noch geöffnet ist oder unmittelbar nach dem Schließen des zweiten Ventils wird das erste Ventil nochmal geöffnet, um einen Teil des CO₂ 's wieder in den ersten Tank zurückzuführen. Anschließend können die anderen oben diskutierten Schritte der Verwendung zusätzlich stattfinden.

Wenn man zum Ausblasen der Behälter eine größere Menge benötigt als das dann nur noch unter Vorblasdruck stehende CO₂ im Behälter, so kann man auch auf das Recycling in den Tank unter Vorblasdruck verzichten.

Insbesondere besteht der Vorformling bzw. Behälter zu mehr als 80% aus PET.

Insbesondere weist der fertig geformte Behälter einen Petaloidboden auf.

In einem bevorzugtem Verfahren wird die Reckstange zum Recken des Vorformlings in diesen hineingefahren, bis ein Boden einer Blasform erreicht ist. Anschließend wird die Reckstange vollständig aus dem Behälter herausgezogen, um für einen Füllprozess einen möglichst großen Querschnitt zur Verfügung zu stellen. Anschließend wird die Reckstange wieder in den Kopfraum des Behälters eingeführt, um diesen auszuformen. Anschließend wird die Reckstange wieder aus dem Behälter herausgezogen.

Anstatt die Reckstange vollständig aus dem Behälter für den Füllvorgang herauszuziehen, kann diese auch im Kopfraum des Behälters verweilen und beispielsweise dazu verwendet werden, das Produkt (Getränk) durch ein an der Reckstange vorhandenes Schirmchen an die Behälteraußenwand zu leiten.

Für die Schritte des Aufblasens wird insbesondere eine Blasdüse (bzw. Fülldüse) verwendet, welche die Reckstange ringförmig umgibt und welche im Mündungsbereich des Behälters positioniert, insbesondere am Behälter oder der Form abdichtend positioniert, wird. Das Füllen geschieht ebenfalls insbesondere über die Blasdüse.

### Kurze Beschreibung der Figuren

- Fig. 1: zeigt eine schematische Darstellung einer erfindungsgemäßen Formfüllmaschine.
- Fig. 2: zeigt eine mögliche Ausführungsform mit einfahrbarer Lanze.
- Fig. 3: zeigt eine weitere Ausführungsform der Erfindung mit Verschlussvorrichtung.
- Fig. 4a-c: Schematische Darstellung des Füll- und Spülvorgangs.

### Ausführliche Beschreibung

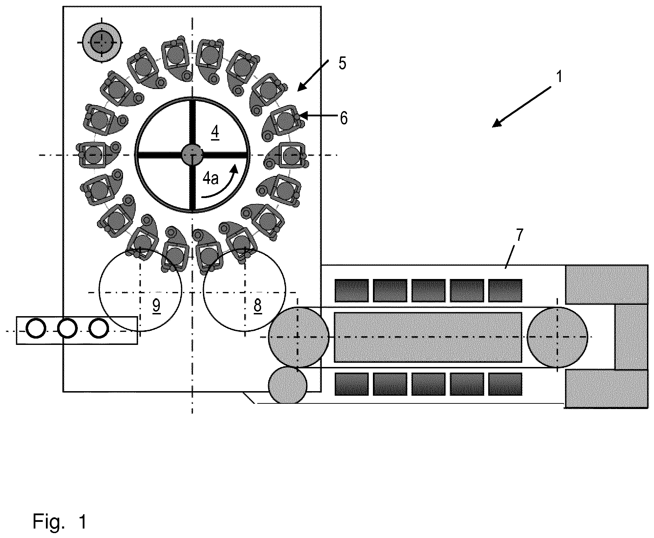

Fig. 1 zeigt eine schematische Darstellung einer erfindungsgemäßen Formfüllmaschine 5 in einer Formfüllanlage 1. Diese kann, wie hier dargestellt, beispielsweise als Rundläufermaschine ausgebildet sein, die über eine Vielzahl von Formfüllstationen 6, die auf einem Karussell 4 angeordnet sind, verfügt. Das Karussell kann entlang der dargestellten Pfeilrichtung 4a um eine Achse drehbar sein. Den unterschiedlichen Formfüllstationen können über entsprechende Zuförder- und Abfördereinrichtungen 8, 9, wie beispielsweise Drehsterne, Vorformlinge aus Kunststoffmaterialien, wie beispielsweise PET zugeführt werden.

Von den Transporteinrichtungen werden diese an die Formfüllstation 6 übergeben. Die Formfüllstationen umfassen üblicherweise zwei Formhälften, in die der Vorformling eingelassen werden kann. In den Formhälften wird der Vorformling dann zu einem Behälter ausgeformt. Dies kann beispielsweise durch Verstrecken mittels einer Reckstange und/oder Einbringen eines Mediums unter hohem Druck passieren. Für das Ausformen des Behälters kann z.B. auch das in den Behälter einzufüllende Produkt genutzt werden. Alternativ kann das Ausformen jedoch auch vollständig oder teilweise mit Hilfe von eingeblasener Luft bewirkt werden.

Unabhängig davon, ob das Ausformen mittels Produkt erfolgt oder nicht, ist vorgesehen, dass in der Formfüllmaschine auch die Befüllung des ausgeformten Behälters erfolgt, wobei die Befüllung bereits während des Ausformens beginnen kann oder erst nach vollständigem Abschließen des Ausformens erfolgt. Dies bringt den Vorteil, dass der nach dem Ausformen immer noch heiße Behälter schneller gekühlt werden kann.

Grundsätzlich problematisch dabei ist, dass im Kopfraum eines befüllen Behälters ein flüssigkeitsfreier Bereich verbleibt, in dem beispielsweise Gas aus der Umgebung, wie Luft, angesammelt sein kann. Neben der Keimeintragsmöglichkeit ist ein Lufteinschluss insbesondere auch für sauerstoffempfindliche Getränke wie Bier nachteilig, da es dadurch zu einer verringerten Produkthaltbarkeit kommen kann.

Daher ist erfindungsgemäß vorgesehen, dass nach dem Ende des Füllvorgangs ein Gas, insbesondere ein inertes Gas, wie beispielsweise CO₂ in jeglichem Aggregatzustand, in den Kopfraum eingeleitet wird, so dass das im Kopfraum verbleibendes Gas, wie beispielsweise Luft, aus dem Kopfraum verdrängt wird.

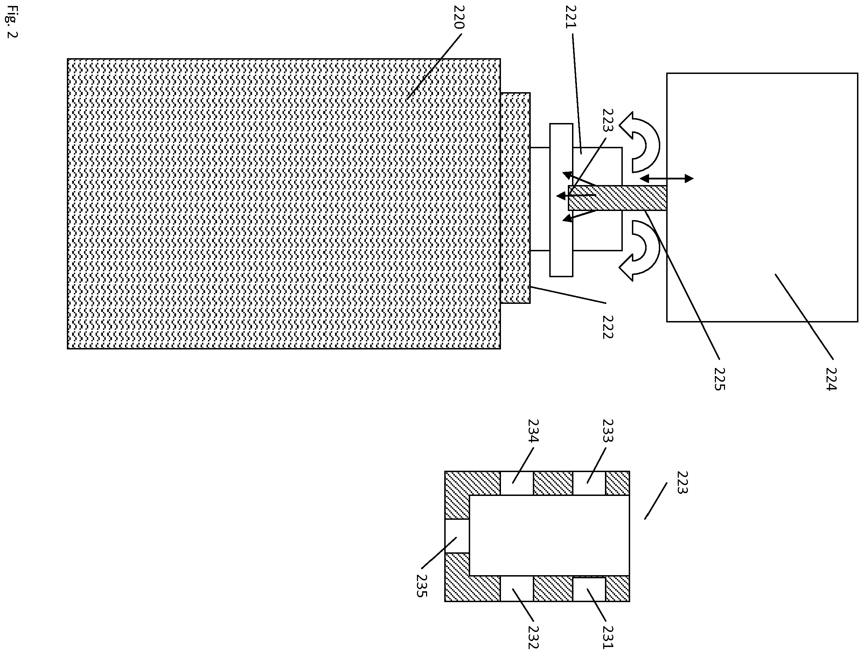

Fig. 2 zeigt eine mögliche Ausführungsform der Erfindung, bei der der Behälter 220 hier nur schematisch dargestellt ist. Er befindet sich noch in einer hier nicht dargestellten Form einer Formfüllstation 6, wie sie beispielsweise in Fig. 1 beschrieben wurden. Der Behälter ist bis zum Füllstand 222 mit Flüssigkeit befüllt. Im darüber liegenden Kopfraum 221 befindet sich keine Flüssigkeit. Nach dem Füllen kann jedoch unerwünschtes Gas, wie beispielsweise Luft, verblieben sein. Um diese zu verdrängen, wird mittels einer Düse 223 ein Gas in den Kopfraum eingeleitet. Dazu kann die Düse beispielsweise an einer Lanze 225 angeordnet sein, die in den Kopfraum des befüllten Behälters einfahrbar ist und zwar so weit, dass sie nicht den Flüssigkeitsspiegel berührt. Ist die Düse so im Kopfraum des Behälters positioniert, wird das Spülgas, wie beispielsweise CO₂, aus der Düse geblasen, um das verbleibende Gas zu verdrängen.

Eine detailliertere Ansicht einer Ausführungsform der Düse ist rechts in Figur 2 dargestellt. So kann die Düse beispielsweise eine Öffnung 235 am unteren Ende und zusätzlich weitere Öffnungen 231-234 an den Seiten aufweisen. Dabei ist unter dem Begriff der "Düse" die gesamte Anordnung an Öffnungen am unteren Ende der Lanze zu verstehen.

Die Lanze 225 oder die Düse 223 können an einem Teil der Formfüllstation 224 befestigt sein, in der beispielsweise auch eine Reckstange zum Verstrecken des Vorformlings zum ausgeformten Behälter und/oder ein Füllorgan oder Füllventil angeordnet sein können. Damit das verbleibende Gas aus dem Kopfraum ausströmen kann, kann die Öffnung des Behälters 220 zur Umgebung hin offen sein. Da so jedoch insbesondere beim erneuten Herausziehen der Lanze 225 aus dem Kopfraum 221 des Behälters die umgebende Luft wieder in den Kopfraum eindringen kann, kann es in dieser Ausführungsform notwendig sein, auch während des Herausziehens der Lanze 225 Spülgas aus der Düse 223 im Kopfraum oder in der Nähe des Kopfraums zu verteilen, so dass von außen kommende umgebende Luft nicht in den Kopfraum eindringt.

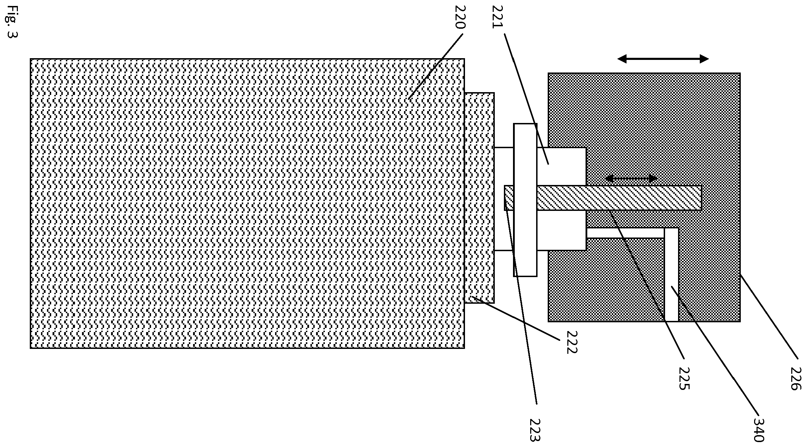

Alternativ kann gemäß der Ausführungsform in Fig. 3 auch der Kopfraum des Behälters von der umgebenden Luft abgeschlossen werden. Dazu kann ein Teil 226 (Verschlussvorrichtung) der Formfüllstation von oben um den Öffnungsbereich des Behälters gefahren werden, so dass der Öffnungsbereich von der Umgebung getrennt wird. Dieses temporäre Verschließen der Öffnung des Behälters 220 ist vorzugsweise so, dass die Öffnung luftdicht von der Umgebung getrennt ist. Nach diesem Verschließen wird durch die Düse 224, die auch in dieser Ausführungsform gegebenenfalls an einer Lanze 225 angeordnet sein kann, Spülgas in den Kopfraum 221 des Behälters geleitet, um das noch verbliebene Gas aus dem Kopfraum 221 zu verdrängen.

Damit das im Kopfraum verbliebene Gas aus dem Kopfraum entweichen kann, ist vorgesehen, dass in dem Verschlussteil 226 entweder ein zusätzlicher Abzug bzw. eine zusätzliche Abzugsöffnung 340 vorgesehen ist, durch die das verbleibende Gas strömen kann oder die Lanze kann über zwei voneinander getrennte Leitungswege verfügen, wobei durch den einen Leitungsweg das Spülgas geleitet wird und über den anderen Leitungsweg das in dem Kopfraum 221 verbliebene Gas aus dem Kopfraum herausströmen kann. Diese Leitungswege können konzentrisch zueinander angeordnet sein, aber auch nebeneinander liegen.

Um einen möglichst guten Abzug des im Kopfraum verbliebenen Gases zu realisieren, kann vorgesehen sein, dass die Lanze über nur eine Düse 224 am unteren Ende verfügt aber über eine Vielzahl von Öffnungen an der Seitenfläche ähnlich wie in Figur 2 dargestellt, so dass das verbliebene Gas durch diese entweichen kann.

Besonders vorteilhaft ist es, da die Lanze 225 nicht als zusätzliches Bauteil ausgeführt ist sondern die zum Ausformen des Behälters üblicherweise verwendete Reckstange über eine entsprechende Düse zum Einbringen des Spülgases verfügt. Die Reckstange wird nach dem Ausformen des Behälters und vor dem Einbringen des Produkts in den Behälter aus diesem herausgefahren werden, so dass das Produkt ungehindert, beispielsweise durch ein Füllventil, eingeleitet werden kann. Anschließend kann die Reckstange entweder entsprechend der Ausführungsform gemäß Fig. 2 oder der Ausführungsform gemäß Fig. 3 in den Kopfraum des befüllten Behälters positioniert werden und durch die entsprechende Düse 223 das Spülgas in den Kopfraum einbringen. Dabei kann vorgesehen sein, dass zumindest ein Teil des Ausformprozesses mit Druckluft erfolgt und das Spülgas aus denselben Düsen geleitet wird wie die Druckluft. So kann auch nach dem Ausformen und vor dem Befüllen zusätzlich mit dem Spülgas der gesamte Innenraum gespült werden.

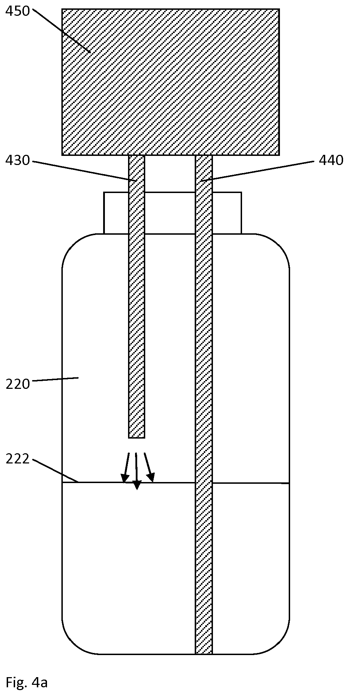

In einer weiteren in den Fig. 4a-4c dargestellten Ausführungsform wird die Verfahrbarkeit der Reckstange innerhalb des ausgeformten Behälters genutzt, um das nicht mit Flüssigkeit angefüllte Volumen im Kopfraum des Behälters möglichst lange möglichst gering zu halten, bevor das Spülgas eingeleitet wird.

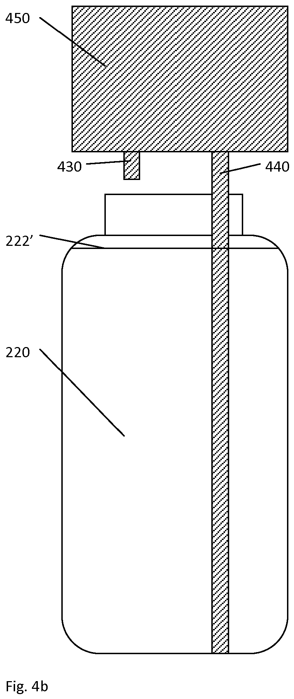

Dazu ist in Fig. 4a der Füllvorgang in dem ausgeformten Behälter 220 bei immer noch in dem Behälter 220 eingefahrener Reckstange 440 dargestellt. Der Behälter ist in der in Fig. 4a dargestellten Situation bis zum Füllstand 222 gefüllt. Dazu wird der Behälter über ein Füllventil, das auch an einer Lanze angeordnet sein kann oder nur als Ventil aus einem Teil 450 der Formfüllstation herausragt, mit dem Produkt befüllt. Dieser Prozess kann entweder nach dem vollständigen Ausformen des Behälters 220 erfolgen oder bereits während des Ausformens beginnen. Die teilweise oder vollständig in den Behälter eingefahrene Reckstange verdrängt dabei Volumen, das eigentlich von dem eingefüllten Produkt eingenommen werden sollte. Dies führt dazu, dass nach Abschluss des Befüllvorgangs, wie es in Fig. 4b dargestellt ist, der Flüssigkeitsspiegel 222' des Produkts höher liegt, als dies nach Abschluss des eigentlichen Füllvorgangs der Fall sein sollte. Durch den höherliegenden Flüssigkeitsspiegel wird jedoch erreicht, dass weniger verbleibendes Glas im Kopfraum vorhanden ist.

Bevorzugt ist, wenn nach Beendigung des Füllvorgangs und vor Herausziehen der Reckstange das nicht mit Flüssigkeit angefüllte Volumen im Kopfraum 1/10, vorzugsweise 1/20, besonders bevorzugt 1/50 des Volumens des nicht mit Flüssigkeit angefüllten Kopfraums bei herausgezogener Reckstange beträgt. Um diese Werte zu realisieren, kann es notwendig sein, dass die Reckstange bereits während des Befüllens zumindest teilweise aus dem Behälter herausgefahren wird. Dies ist insbesondere dann der Fall, wenn das Volumen der Reckstange so groß ist, dass es das Gesamtvolumen des Kopfraums, in dem keine Flüssigkeit vorhanden ist, wenn die Reckstange vollständig aus dem Behälter herausgezogen ist, übersteigt. Die Einfahrtiefe der Reckstange kann dabei auf einfache Weise kontrolliert werden, indem in Abhängigkeit der abgefüllten Menge und des noch verbleibenden Volumens die Einfahrtiefe der Reckstange geändert wird.

Nachdem der Behälter in Fig. 4b vollständig befüllt wurde, wird nun die Reckstange 440 aus dem mit Flüssigkeit befüllten Bereich des Behälters 220 herausgezogen. Dabei sinkt der Flüssigkeitsspiegel 222' gemäß Fig. 4b auf den Flüssigkeitsspiegel 222", wobei das im Kopfraum freiwerdende Volumen dem von der Reckstange in Fig. 4b verdrängten Volumen in dem Behälter bis zum Flüssigkeitsspiegel 222' entspricht. Ist die Reckstange in die Position 440' verfahren, so dass sich die Düse 223 oberhalb des Flüssigkeitsspiegels 222" befindet, wird mit dem Einbringen des Spülgases begonnen. Da das Herausziehen der Reckstange relativ schnell erfolgen kann und mit dem Einleiten des Spülgases begonnen werden kann, kann hier bereits das Eindringen von umgebender Luft vermieden werden.

Besonders vorteilhaft ist es, wenn die Reckstange entlang ihrer Länge an der Außenseite Öffnungen bzw. Ventile zum Auslassen von Spülgas besitzt (ähnlich den Öffnungen 231-234 gemäß Figur 2), so dass, sobald die Reckstange aus der Position gemäß Fig. 4b verfahren wird, Spülgas im nicht mit Flüssigkeit gefüllten Kopfraum verteilt wird. Besonders vorteilhaft ist es, wenn der Ausströmdruck aus den seitlichen Düsen zumindest geringfügig über dem umgebenden Atmosphärendruck liegt, so dass sich ein Überdruck bildet, der das Eindringen von umgebendem Gas, insbesondere Luft und Sauerstoff, verhindert. Das anschließende Einbringen von Spülgas durch die am unteren Ende der Reckstange angebrachte Düse kann dann auch die Restmenge an im Kopfraum verbliebenem Gas verdrängen.

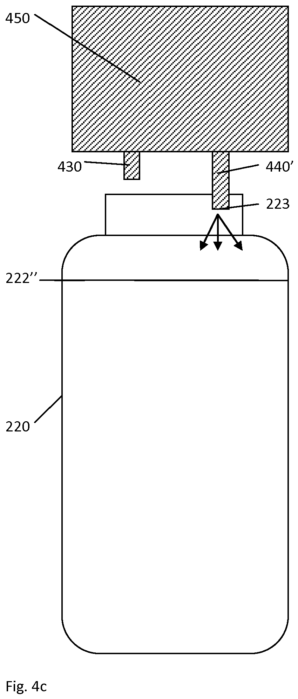

Die Ausführungsform gemäß Fig. 4a-4c kann sowohl auf die Ausführungsform gemäß Fig. 2 als auch auf die Ausführungsform gemäß Fig. 3 angewendet werden. Wird die Ausführungsform der Figur 4 auf die Ausführungsform gemäß Fig. 3 angewendet, ist es besonders vorteilhaft, wenn das luftdichte Verschließen bereits vor dem Befüllen und insbesondere sogar vor dem Ausformen des Behälters erfolgt. Erfolgt das luftdichte Verschließen vor dem Ausformen des Behälters und wird der Vorformling durch Einleiten von Produkt zum vollständigen Behälter ausgeformt, ist die im befüllten Behälter verbleibende Gasmenge sehr gering, so dass hier nur noch mit wenig Spülgas gespült werden muss.

Wird der Behälter durch eine Blasdüse mittels Druckluft oder Druckgas zum Behälter ausgeformt, so ist auch eine Ausführungsform denkbar, in der die Blasdüse zum Einbringen des Spülgases verwendet wird und das Absaugen des Spülgases bzw. des im Behälter verbliebenen Gases durch die Reckstange oder eine zusätzliche Lanze erfolgt.

Üblicherweise kann das verwendete Gas, wie insbesondere CO₂, aus einem separaten Tank zugespeist werden, beispielsweise mit Hilfe eines Ringkanals in der Formfüllmaschine den einzelnen Formfüllstationen zugeführt werden kann. Werden mit der Formfüllmaschine Behälter mit kohlensäurehaltigen Substanzen befüllt, so kann hier bereits CO₂ für die Spülung abgegriffen werden.

In einer weiteren Ausführungsform kann zum luftdichten Verschließen des Behälters auch vorgesehen sein, dass nach dem Befüllen eine semipermeable Membran auf die Öffnung des befüllten Behälters aufgebracht wird. Diese Membran kann dann beispielsweise von einer sehr dünnen Lanze mit Durchmesser von 2, bevorzugt 1, bevorzugt weniger als 1 mm durchstochen werden, um das Spülgas einzuleiten. Aufgrund der Semipermeabilität der Membran kann das im Kopfraum des befüllten Behälters verbliebene Gas durch die Membran entweichen aber andererseits kein Gas und insbesondere keine Luft aus der Umgebung in den Kopfraum eindringen, außer das durch die Lanze eingebrachte Spülgas. Wird in dem durch die Membran verschlossenen Kopfraum ein geringer Überdruck des Spülgases erzeugt, kann selbst bei Herausziehen der Lanze sichergestellt werden, dass kein umgebendes Gas in den Kopfraum durch das Loch in der Membran eindringen kann.

## Patentansprüche

1. Verfahren zum Herstellen von Behältern aus Vorformlingen, wobei der Vorformling in eine Formfüllstation eingebracht, in dieser ausgeformt und befüllt wird, wobei nach Beendigung des Füllvorgangs im Kopfraum (221) verbleibendes Gas durch ein Spülgas ersetzt wird, wobei eine Düse an einer zum Ausformen des Behälters verwendeten Reckstange das Spülgas einbringt, **dadurch gekennzeichnet, dass** die Reckstange zum Einbringen des Spülgases so weit in den befüllten Behälter eingefahren wird, dass sie den Flüssigkeitsspiegel nicht berührt, und wenn die Düse so im Kopfraum des Behälters positioniert ist, das Spülgas aus der Düse geblasen wird, um das verbleibende Gas zu verdrängen.

2. Verfahren nach Anspruch 1, **dadurch gekennzeichnet, dass** als Spülgas ein inertes Gas, insbesondere CO2 verwendet wird.

3. Verfahren nach Anspruch 1 oder 2, **dadurch gekennzeichnet, dass** der Vorformling während des Ausformens durch die in den Vorformling eingefahrene Reckstange verstreckt wird, die Reckstange nach dem Ausformen aus dem Behälter herausgefahren wird, und anschließend das Produkt in den Behälter gefüllt wird.

4. Verfahren nach Anspruch 3, **dadurch gekennzeichnet, dass** das Spülgas bei aus dem Behälter herausgefahrener Reckstange eingebracht wird.

5. Verfahren nach einem der Ansprüche 1 bis 4, **dadurch gekennzeichnet, dass** der Vorformling vor dem Ausformen und bis nach Einbringen des Spülgases luftdicht durch eine Verschlussvorrichtung (226) verschlossen wird.

## Claims

1. Process to produce containers out of preforms, whereby the preform is inserted in a form-filling station, molded and filled in that station, wherein gas, which remains in the head space (221) after the end of the filling process, is replaced by a purge gas, wherein a nozzle at a stretching rod used to mold the container introduces the purge gas, **characterized in that** the stretching rod, for introducing the purge gas, is moved so much into the filled container that it does not touch the fluid level and, when the nozzle is positioned this way in the head space of the container, the purge gas is blown out of the nozzle in order to displace the remaining gas.

2. Process according to claim 1 or 2, **characterized in that** an inert gas, especially CO2, is used as a purge gas.

3. Process according to one of the claims 1 to 2, **characterized in that** the preform is stretched by the stretching rod that is inserted in the preform during molding, that the stretching rod is moved out of the containers after the molding process and that the product is subsequently filled into the container.

4. Process according to claim 3, **characterized in that** the purge gas is added while the stretching rod is moved out of the container.

5. Process according to one of the claims 1 to 4, **characterized in that** the preform is sealed in an airtight way by a sealing unit (226) prior to molding and until after the addition of the purge gas.

## Revendications

1. Procédé de fabrication de contenants à partir de préformes,
d'après lequel la préforme est introduite dans un poste de formage-remplissage et y est mise en forme et remplie,
d'après lequel, après achèvement de l'opération de remplissage, du gaz résiduel dans l'espace de tête (221) est remplacé par un gaz de rinçage, et
d'après lequel une buse sur une tige d'étirage utilisée pour le formage du contenant, introduit le gaz de rinçage,
**caractérisé en ce que** la tige d'étirage, en vue d'introduire le gaz de rinçage, est engagée dans le contenant rempli, de manière à ne pas entrer en contact avec le niveau de liquide, et, lorsque la buse est ainsi positionnée dans l'espace de tête du contenant, le gaz de rinçage est soufflé hors de la buse en vue de refouler le gaz résiduel.

2. Procédé selon la revendication 1, **caractérisé en ce que** l'on utilise en guise de gaz de rinçage, un gaz inerte, notamment du CO2.

3. Procédé selon la revendication 1 ou la revendication 2, **caractérisé en ce que** la préforme subit pendant le formage, un étirage par la tige d'étirage introduite dans la préforme, puis la tige d'étirage est retirée hors du contenant après le formage, et le contenant est ensuite rempli avec le produit.

4. Procédé selon la revendication 3, **caractérisé en ce que** le gaz de rinçage est introduit lorsque la tige d'étirage a été retirée hors du contenant.

5. Procédé selon l'une des revendications 1 à 4, **caractérisé en ce que** la préforme, avant le formage et jusqu'à l'introduction du gaz de rinçage, est fermée de manière étanche à l'air par un dispositif de fermeture (226).
